**Europäisches Patentamt**

**European Patent Office**

**Office européen des brevets**

(19)

(11) Numéro de publication: **0 197 834**
**A1**

(12) # DEMANDE DE BREVET EUROPEEN

(21) Numéro de dépôt: **86400621.8**

(22) Date de dépôt: **25.03.86**

(51) Int. Cl.⁴: **B 01 D 53/04**
**B 01 D 53/26**

(30) Priorité: **29.03.85 FR 8504855**

(43) Date de publication de la demande:
**15.10.86 Bulletin 86/42**

(84) Etats contractants désignés:
**AT BE CH DE FR GB IT LI LU NL SE**

(71) Demandeur: **T.G.I. Traitement de Gaz et Génie Industriel**
**284 rue de la Garenne**
**F-92003 Nanterre(FR)**

(72) Inventeur: **Pallier, Gaston T.G.I. TRAITEMENT DE GAZ**
**ET GENIE IND. Zone Ind. Les Gâtines B.P 54**
**F-78372 Plaisir Cedex(FR)**

(74) Mandataire: **Combe, André et al,**
**CABINET BEAU DE LOMENIE 55 rue d'Amsterdam**
**F-75008 Paris(FR)**

(54) **Procédé et dispositif pour réaliser le séchage de gaz sous pression au moyen d'un adsorbant et régénération dudit adsorbant par le gaz.**

(57) La présente invention concerne un procédé pour le séchage de gaz sous pression à l'aide d'un adsorbant et régénération dudit adsorbant dans la même installation, caractérisé en ce que l'on utilise, montés en parallèle et convenablement interconnectés, au moins trois réacteurs de séchage-régénération, deux desdits réacteurs fonctionnant en phase séchage et le troisième en phase régénération, et que l'on dispose à des endroits de l'installation convenablement choisis sur le trajet du gaz, deux dispositifs assurant une chute de pression dudit gaz; l'invention concerne également un dispositif utilisé pour la miseen oeuvre dudit procédé.

Fig-1

Procédé et dispositif pour réaliser le séchage de gaz sous pression au moyen d'un adsorbant et régénération dudit adsorbant par le gaz.

Dans les installations de séchage de gaz sous pression en utilisant un adsorbant (par exemple, de préférence, une zéolite), il est intéressant de régénérer ledit adsorbant en le traitant par une portion dudit gaz qui a été séché. Le gaz séché qui est utilisé pour réaliser ladite régénération est de préférence, après avoir été débarrassé de la plus grande partie de son eau (par exemple par condensation), recyclé dans l'installation de séchage.

Compte tenu des pertes de charges subies par les gaz à la fois dans les dispositifs de séchage et dans les dispositifs de régénération (ces deux dispositifs étant bien évidemment identiques de façon qu'ils puissent être utilisés successivement comme sécheurs et régénérateurs), on considère que ce recyclage n'est possible qu'en recomprimant les gaz pour amener leur pression de celle qu'ils ont à la sortie du régénérateur jusqu'à la pression qu'ils ont à l'entrée dans l'installation. Cette recompression nécessite l'emploi d'un surpresseur d'autant plus coûteux que la pression de travail est plus élevée.

La présente invention vise un procédé et un dispositif pour éviter l'utilisation de ce surpresseur.

Le procédé selon l'invention est caractérisé en ce que l'on utilise, montés en parallèle et convenablement interconnectés, au moins trois réacteurs de séchage-régénération, deux desdits réacteurs fonctionnant en phase séchage et le troisième en phase régénération,

- le premier des réacteurs opérant en phase séchage étant alimenté par le gaz à sécher sous sa pression initiale,
- le second des réacteurs opérant en phase séchage étant alimenté par le gaz à sécher qui a subi, par tout dispositif approprié, une baisse de pression sensiblement égale à la perte de pression subie par les gaz lorsqu'ils traversent deux desdits réacteurs et un condenseur et étant également alimenté par le gaz humide sortant du réacteur de régénération et partiellement déshydraté dans ledit condenseur,

- le réacteur opérant en phase régénération étant alimenté par une portion du gaz sec sortant dudit premier réacteur.

le gaz sortant du second des réacteurs opérant en phase séchage étant mélangé au gaz sortant du premier réacteur opérant en phase séchage après que ce dernier a subi, par tout dispositif approprié, une baisse de pression sensiblement égale à la perte de pression subie par les gaz lorsqu'ils traversent deux desdits réacteurs et un condenseur.

Le dispositif selon l'invention est caractérisé en ce qu'il comporte au moins trois réacteurs de séchage-régénération montés en série et convenablement interconnectés, un condenseur pouvant être connecté à l'un quelconque desdits réacteurs et deux dispositifs provoquant un abaissement de la pression du gaz, l'un desdits dispositifs étant sur une dérivation de la ligne d'arrivée des gaz et l'autre étant sur la ligne de sortie des gaz avant le point de mélange des gaz secs sortant des réacteurs.

Bien évidemment, la régénération de l'adsorbant contenu dans les réacteurs exigeant l'utilisation de gaz chauds, un dispositif de chauffage est prévu entre les réacteurs de façon à pouvoir réchauffer la portion des gaz secs qui est envoyée au réacteur de régénération. On notera d'ailleurs que le réacteur, qui en est au stade de la régénération, doit tout d'abord être alimenté en gaz chauds pour que le charbon actif qu'il contient soit régénéré, puis soit ultérieurement refroidi avec des gaz froids secs; ces deux opérations successives peuvent être réalisées soit en prévoyant un by-pass sur le circuit des gaz secs, ledit by-pass entraînant le gaz sec de régénération dans un dispositif de chauffage ou en dehors de ce dispositif, soit en prévoyant que les deux stades de la régénération soient effectués dans deux réacteurs différents. Dans ce dernier cas l'un des réacteurs est alimenté en gaz secs chauds et l'autre est alimenté en gaz secs froids;
bien évidemment il y aura alors quatre réacteurs identiques
interchangeables et les connexions entre lesdits réacteurs seront
convenablement aménagées. Un des avantages de ce système à quatre
réacteurs est qu'il permet, en cas de difficultés soudaines
(fausse manoeuvre par exemple) de disposer encore de trois
réacteurs interconnectés et donc de fonctionner selon le dispositif
à trois réacteurs décrit ci-dessus.

L'invention sera mieux comprise en se référant à
l'exemple non limitatif suivant schématisé sur les lignes 1, 2
et 3.

Sur ces figures on a représenté :

- en 1, 2 et 3, trois réacteurs de séchage-régénération montés en parallèle.
- en 4 l'alimentation en gaz humide sous pression.
- en 5 et 6 les deux dispositifs d'abaissement de la
  pression du gaz (ces dispositifs sont par exemple
  des diaphragmes).
- en 7 un dispositif de réchauffage.
- en 11 un condenseur.
- en 8 la sortie du gaz sec

et, de façon non repérée, les diverses canalisations et vannes qui
permettent des interconnexions convenables entre ces trois réacteurs.

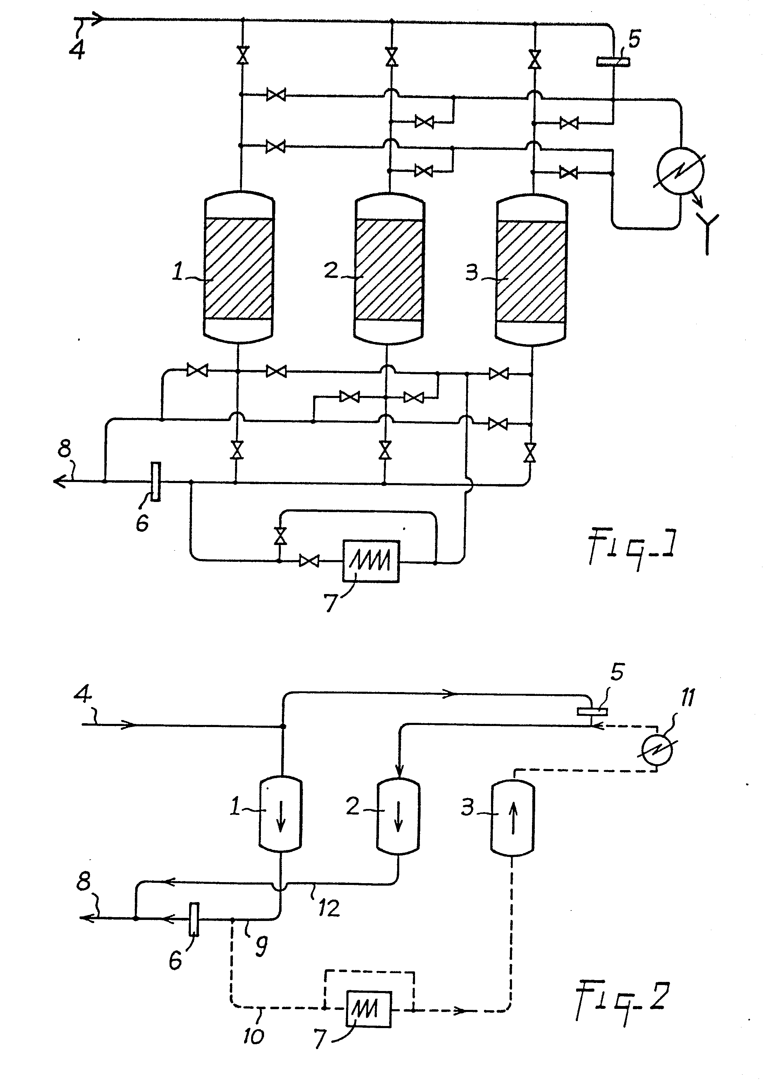

Sur la figure 2, ces mêmes données ont été reprises
et l'on a schématisé une phase de fonctionnement du dispositif.
Dans cette phase :

- les réacteurs 1 et 2 sont en phase séchage et
  le réacteur 3 en phase régénération.
- le gaz à sécher arrive, sous pression, par la
  canalisation 4 et il est divisé en deux portions
  sensiblement égales (60% environ allant vers 1 et
  40% environ allant vers le dispositif 5).
- la partie du gaz humide allant vers le réacteur
  1 traverse ce réacteur en subissant une perte
  de charge $\Delta P_1$ ; il sort sec, par la canalisation 9 ;

une portion de ce gaz sec est dérivée, par la canalisation 10, vers le réchauffeur 7 puis vers le réacteur 3 se trouvant en phase régénération; le gaz humide sortant du réacteur 3 (où il a subi une perte de charge $\Delta P_3$) est envoyé dans un condenseur 11.

- l'autre partie du gaz humide est envoyée dans un diaphragme 5.

- les gaz provenant du condenseur 11 et sortant du diaphragme 5 sont réunis et envoyés sur le réacteur 2 (où ils subissent une perte de charge $\Delta P_2$) opérant en phase séchage ; les gaz sortent dudit réacteur 2 à l'état sec.

- les gaz secs sortant du réacteur 1 arrivent (après prélèvement des gaz utilisés pour la régénération) dans un autre diaphragme 6 puis sont réunis avec les gaz secs provenant, par la canalisation 12 du réacteur 2.

Il apparaît donc clairement que la fonction des dispositifs 5 et 6 est :

- pour le dispositif 5 de diminuer la pression du gaz arrivant en 4 d'une valeur égale à $\Delta P_1 + \Delta P_3 +$ éventuellement les pertes de charge dans le réchauffeur 7 et dans le condenseur 11.

- pour le dispositif 6 de diminuer la pression du gaz sec sortant du réacteur $P_1$ d'une valeur égale à $\Delta P_3 + \Delta P_2 +$ éventuellement les pertes de charge dans le réchauffeur 7 et dans le condenseur 11.

Comme on le voit sur les figures 1 et 2, le réchauffeur 7 est pourvu d'un dispositif de by-pass de façon que, dans une première étape, on envoie dans le réacteur en cours de régénération (réacteur 3) des gaz secs chauffés et que, dans une deuxième étape, on envoie dans ledit réacteur des gaz passant par le by-pass qui sont donc secs et froids.

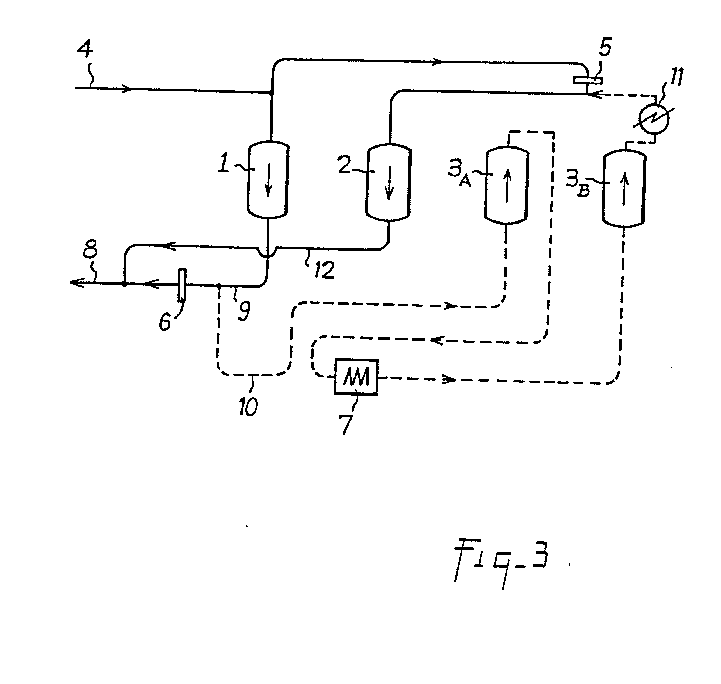

Mais on peut également utiliser un ensemble comportant quatre réacteurs identiques comme cela est représenté sur la figure 3.

Sur cette figure on retrouve les mêmes dispositifs que ceux des figures 1 et 2, mais le réacteur 3 est remplacé par les réacteurs 3A et 3B qui sont également en phase régénération (comme 3). Il apparaît que le gaz sec sortant du réacteur 1 passe d'abord dans le réacteur 3A (lequel a déjà subi une partie de régénération) où il refroidit la masse de charbon actif puis est chauffé en 7 et passe dans le réacteur 3B.

Il est possible en utilisant le même principe de concevoir des systèmes plus complexes fondés sur l'emploi de plusieurs groupes de trois ou quatre réacteurs.

REVENDICATIONS

1.          Procédé pour le séchage de gaz sous pression à l'aide d'un adsorbant et régénération dudit adsorbant dans la même installation, caractérisé en ce que l'on utilise, montés en parallèle et convenablement interconnectés, au moins trois réacteurs de séchage-régénération, deux desits réacteurs fonctionnant en phase séchage et le troisième en phase régénération,

- le premier des réacteurs opérant en phase séchage étant alimenté par le gaz à sécher sous sa pression initiale,

- le second des réacteurs opérant en phase séchage étant alimenté par le gaz à sécher qui a subi, par tout dispositif approprié, une baisse de pression sensiblement égale à la perte de pression subie par les gaz, lorsqu'ils traversent deux desdits réacteurs et un condenseur et étant également alimenté par le gaz humide sortant du réacteur de régénération et partiellement déshydraté dans ledit condenseur,

- le réacteur opérant en phase régénération étant alimenté par une portion du gaz sec sortant dudit premier réacteur;

le gaz sortant du second des réacteurs opérant en phase séchage étant mélangé au gaz sortant du premier réacteur opérant en phase séchage après que ce dernier a subi, par tout dispositif approprié, une baisse de pression sensiblement égale à la perte de pression subie par les gaz lorsqu'ils traversent deux desdits réacteurs et un condenseur.

2.          Procédé selon la revendication 1 , caractérisé en ce que ledit réacteur opérant en phase régénération est constitué de deux réacteurs, identiques aux deux autres, dont l'un et en régénération proprement dite à l'aide de gaz secs chauds et, dont l'autre est en refroidissement grâce à l'utilisation de gaz secs froids.

3.          Appareillage pour la mise en oeuvre du procédé selon la revendication 1, caractérisé en ce qu'il comporte au moins trois réacteurs (1), (2), (3) de séchage-régénération montés en série et convenablement interconnectés, un condenseur (11) pouvant être connecté à l'un quelconque desdits réacteurs, deux dispositifs (5),(6) provoquant un abaissement de la pression du gaz, l'un desdits dispositifs étant sur une dérivation de la ligne d'arrivée des gaz et l'autre étant sur la ligne de sortie des gaz avant le point de mélange des gaz secs sortant des réacteurs.

4.          Appareillage pour la mise en oeuvre du procédé selon la revendication 2, caractérisé en ce qu'il comporte au moins un ensemble de quatre réacteurs (1), (2),(3A) et (3B) de séchage-régénération convenablement interconnectés, un condenseur (11) pouvant être connecté à l'un quelconque desdits réacteurs, deux dispositifs (5), (6) provoquant un abaissement de la pression du gaz, l'un desdits dispositifs étant sur une dérivation de la ligne d'arrivée des gaz et l'autre étant sur la ligne de sortie des gaz avant le point de mélange des gaz secs sortant du réacteur.

Fig.1

Fig.2

0197834

Fig-3

Office européen
des brevets

**RAPPORT DE RECHERCHE EUROPEENNE**

**0197834**

Numéro de la demande

EP 86 40 0621

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 380 063 (DROOGTECHNIEK EN LUCHTBEHANDELING) | | B 01 D 53/04 B 01 D 53/26 |
| A | FR-A-2 190 501 (CEAG DOLOMIT) | | |

--- 

----- 

| | | | DOMAINES TECHNIQUES RECHERCHES (Int. Cl.4) |
|---|---|---|---|
| | | | B 01 D 53/00 |

Le présent rapport de recherche a été établi pour toutes les revendications

| Lieu de la recherche | Date d'achèvement de la recherche | Examinateur |
|---|---|---|
| LA HAYE | 11-07-1986 | BOGAERTS M.L.M. |